# EUROPEAN PATENT APPLICATION

(11) **EP 4 137 746 A1**
(43) Date of publication of application: **22.02.2023**
(21) Application number: 21787761.2
(22) Date of filing: 14.04.2021
(51) Int. Cl.: F23G 5/027, F23G 7/10

(54) **VERTICAL CONTINUOUS MULTIPHASE REACTOR FOR THE CLEAN PRODUCTION OF HYDROCARBONS AND ENERGY AND THERMOCHEMICAL METHOD CARRIED OUT**

(30) Priority: 14.04.2020 CO 20004451
(71) Applicant: Biotecnologia y Bioingenieria Core S.A., Barranquilla Atlántico (CO) Barranquilla (CO)
(72) Inventor: GUTIÉRREZ FONSECA, Jaime Eduardo, Bogota (CO)
(74) Representative: Hernández Hernández, Carlos
(86) International application number: PCT/IB2021/053082
(87) International publication number: WO 2021/209926

(57) **Abstract**

Disclosed is a reactor and method for thermochemically degrading wet biomass without the need for prior drying, in particular microalga-rich substrates. The invention provides a vertical continuous multiphase reactor (VCMR) that simultaneously, progressively and continuously carries out the steps of evaporation, pyrolysis, gasification and combustion, in separate chambers, using indirect heating. The reactor operates at pressures below atmospheric pressure to increase thermal and productive efficiency, using a fraction of the same products as fuel to achieve thermal self-sufficiency. A system for instant evaporation at low temperature by means of adiabatic expansion is used. The reactor has high efficiency and high yield, requiring minimum space, and can be movable. The products obtained from the reactor are synthesis gas, biocarbon and bio-oils, with uses in energy, agriculture, cosmetics, health and construction. The invention also provides a method for obtaining hydrocarbons and energy from high-moisture biomass, wherein the steps are carried out continuously and the method does not need to be interrupted to add new wet biomass for conversion.

## Description

### Field of the invention

The present invention is in the field of continuous vertical thermal reactors and is useful in the areas of environmental remediation, greenhouse gases (GHG) reduction, energy production from wet biomasses and bio solids without prior drying, incineration of hazardous materials, as well as clean production of bio hydrocarbon derivatives.

The products obtained from the process developed in the reactor are used in sectors such as agriculture, integrated water management, decontamination, and as a raw material in the pharmaceutical industry, chemical and health industries.

### Background of the invention

The thermochemical transformation of biomasses through processes such as pyrolysis and gasification is made through a variety of technologies (Brett Digman, 2020). In particular, microalgae biomass has great potential for energy utilization and material recovery by different methods (John J. Milledge, 2020), mainly for the production of hydrocarbons such as bio carbon, bio-oils, bio syngas and heat (John J. Milledge 1, 2020).

However, the high moisture content of microalgae biomass, which always exceeds 50% HBS, has been the main difficulty in bringing its energy utilization to a commercial level, since a large amount of energy is required to release the water content, which makes the use of fuels and/or external heat sources necessary that result in a negative energy balance.

However, energy, bio char derivatives and bio-oils can be obtained from the transformation of biomass by thermochemical means, with applications that replace hydrocarbons obtained from fossil fuels, in sectors such as agriculture (fertilizers, manures, amendments, insecticides, fungicides, immunizers), livestock (supplements, degasifiers, veterinary medicines), food (filters), energy (pellet briquettes, synthetic gas, synthetic diesel, synthetic naphtha), construction (moisture retainers, air filters, de-ionizers), health (detoxifiers) and cosmetics (toiletries and dermatology) (Schmidt, 2012).

The thermochemical degradation of organic matter contained in various types of wet biomasses such as microalgae, decomposes the complex chains of heavy hydrocarbons into medium and low molecular weight compounds, breaking the bonds by an endothermic process and facilitating reactions between carbon, hydrogen and oxygen. The process is carried out in a reactor where variables of pressure, temperature, heat flow, material and gas flows are controlled, considering the complete system of equipment as a bio refinery.

The information available to date presents patented developments and scientific studies with a variety of process technologies and devices for energy recovery and recovery of materials. Among those related to this patent the following are included:

Patent CA2798582 shows a device and method for drying and roasting of organic material in a multiple oven. In this reactor only the drying and recovery of gases produced by waste management is achieved.

Patent CN 105859097 shows a method and device for drying sludge using waste heat from the thermal power plant, indicating the usefulness of recovering heat to evaporate sludge, but the thermal source comes from another process, so it is not a autothermal or energy self-sufficient system or reactor.

CN204438139 discloses a multiple hearth furnace sludge incineration equipment, which likewise localizes incineration as a result of thermolysis and requires additional fuels, so it is not considered autothermal.

Patent US4215637 discloses a system for combustion of wet waste materials. It focuses on sludge combustion, but requires a high temperature and pressure process, so it has a high consumption of energy.

On the other hand, patent application US20110197797 shows a method and device to produce activated carbon, in which the processes of drying, roasting and pyrolysis are performed in a vertical multi-hearth reactor, recovering heat and reusing the pyrolysis gases to re-feed the reactor.

Similarly, patents US4100032 and RU0002703617 perform evaporation, pyrolysis and combustion processes in a vertical tray reactor with separate sections, employing a direct heating system, wherein the gases and vapors transfer heat to the material by convection effect when they come in contact.

Patent application US20180106538 also discloses a reactor where freeze-drying and freeze-drying roasting are performed at atmospheric pressure and temperatures up to 250 C, without recovery of materials and energy, requiring external fuels for its operation. The material moves in a system of trays and the sweeping blades are fixed, which reduces the homogeneity of the material cut.

Patent US4308807 does not allow for sludge treatment and is limited to solid organic wastes with low moisture. The reactor is a continuous vertical spiral type and there is heat recovery for other processes.

Patent US4732092 discloses a device using a system of gates for separating pyrolysis and combustion chambers whose primary purpose is to generate gas to be used for energy recovery. The vertical reactor requires combustion in each chamber to generate heat for the thermolysis process.Patent US7452392 discloses a fixed-bed, countercurrent flow, vacuum reactor for synthesis gas generation for solid organic wastes. It cannot be used with sludge and has no phase separation.

From the above analysis it can be inferred that the problem persists, that existing reactors require a high consumption of energy to achieve drying and transformation of biomasses with high humidity, higher than 50%HBH, and only partially transform them. Therefore, there is a need for equipment that allows total and complete transformation of wet biomass or sludge, such as that of cultivated microalgae, without the need for prior drying of the material, a process that is highly energy consuming, to obtain clean final products such as bio-oils, bio-coal and synthesis gas.

### Summary of the invention

The present invention solves the problem of transforming wet biomass, especially that coming from cultivated microalgae, with more than 50% HBH, into bio hydrocarbons, without the need to use equipment or processes for pre-drying of the biomass. A continuous thermochemical process is carried out in a vertical multiphase reactor for drying, pyrolysis, gasification and combustion. The reactor is autothermal, so it does not require additional fuels or external heat sources, with high efficiency due to its operation consisting of instantaneous multi-effect evaporation, with adiabatic expansion in vacuum and heat recovery.

The final products of the process developed are bio hydrocarbons, such as: bio carbon, bio-oils and synthesis gas.

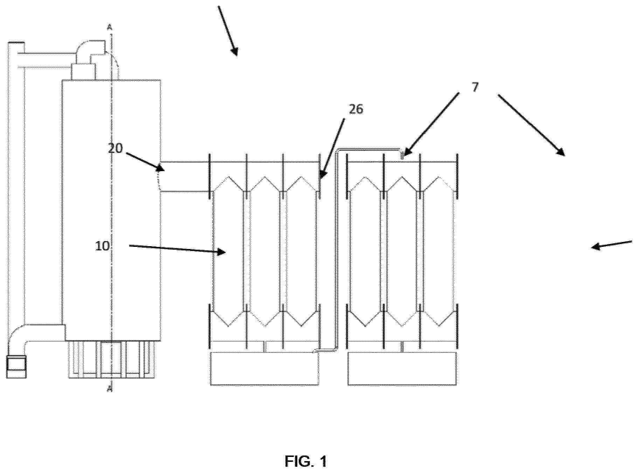

The multiphase continuous vertical reactor has (see figure 1): a biomass and bio solids supply system (1), an evaporation chamber (2) with a vacuum multiple effect fast evaporation system by means of an adiabatic expansion valve (3), a pyrolysis chamber (5), a gasification and combustion chamber (6), a condensation and catalysis system (7). In a preferred method, the reactor has a roasting chamber (4), located between the evaporation chamber (2) and the pyrolysis chamber (5), which allows additional treatment of the biomass that requires it.

The process for obtaining bio hydrocarbons and energy from substrates with high moisture content of the present invention is characterized by being continuous and autothermal. The material flows continuously from one chamber to another to achieve a progressive transformation by gradually raising its temperature and separating the liquid, gaseous and liquid phases.

It starts by dehydrating the wet biomass through a change of pressure and temperature, through one or more nozzles or adiabatic expansion valves (3) by going from pressures above 7 MPa and temperatures above 80°C at a vacuum pressure of up to 15 kPa, or its equivalent at 80% vacuum and evaporation temperature below 60 °C.

Subsequently, roasting and pyrolysis of the dehydrated material is done, by heating up to 550 °C, preferably in vacuum condition, from 20% to 80%, to reduce this temperature by 20% and release volatile matter.

And it ends with the gasification and combustion of the substrate obtained, by incomplete combustion, supplying a quantity of comburent below the stoichiometric ratio at temperatures above 800 °C.

This process, ideal for microalgae biomass, can be used for any other type of wet biomass, defined as that which can be more than 50% HBH, up to 95% HBH. Among the preferred biomasses to perform this process are: microalga biomass, residual biomasses or their mixtures present in sludge and/or solids in liquid substrates of urban, rural and industrial origin, and other denser bio solids.

### Brief description of drawings

To complement the description and in order to aid in a better understanding of the features of the invention, the following figures are attached as an integral part of said description for illustrative and non-limiting purposes, wherein the following has been depicted:
FIG. 1, Front view of the multiphase continuous vertical reactor (10) and the condensation and catalysis system (7).
FIG. 2, Front view of the multiphase continuous vertical reactor (10), in cross section.
FIG. 3, Diagram of elements of the vertical multiphase continuous reactor (10) with details of its parts.
FIG. 4, Multiphase process diagram.
FIG. 5, Self-cleaning adiabatic expansion valve or nozzle (3); a) cross section and b) front view.
FIG. 6, Hermetic sealing gate, sluice type (9); a) isometric view and b) cross section.
FIG. 7, Vertical reactor (10) with detail of heating jacket (15) in a) radial and b) cross section.
FIG. 8, Vertical reactor (10) in radial section with detail of the spiral arms (16).
FIG. 9, Detail of the direct flow exchanger bank (19).
FIG. 10, Thermogravimetric curve of bio solid behavior showing X: temperature in °C, Y: weight in mgr.

### Description of embodiments

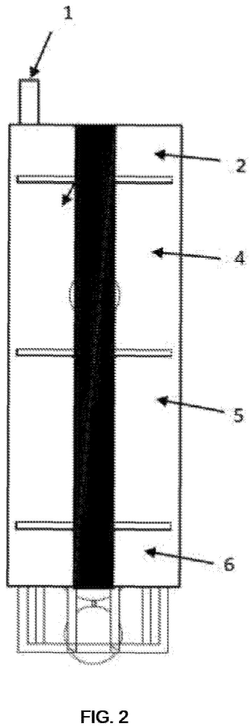

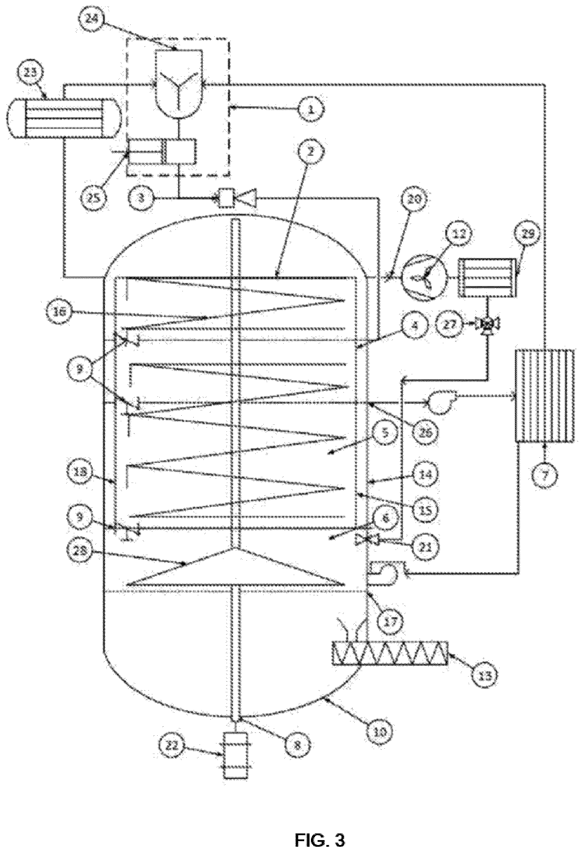

Structure of the reactor: the multiphase continuous vertical reactor, which functions as a down flow reactor, is composed of a vertical vessel (10), a vertical shaft (8), multiple chambers: evaporation (2), pyrolysis (5), gasification and combustion (6). Each chamber is a thermolysis phase. These chambers are connected to each other by hermetically sealed, airlock-type gates (9) to operate under vacuum (Figures 2 and 3).

In a preferred embodiment, the reactor has a roasting chamber (4), located between the evaporation chamber (2) and the pyrolysis chamber (5), which allows additional treatment for the biomass that requires it, due to particle agglomeration conditions and/or tendency to compact with strong temperature changes.

The vertical vessel (10), with a cylindrical or square section supporting structure, has a vertical rotating shaft (8) driven by a drive system (22), preferably of the geared motor type: electric motor, speed reduction gearbox, shaft coupling and shaft supported by bearings, to which spiral arms (16) are attached.

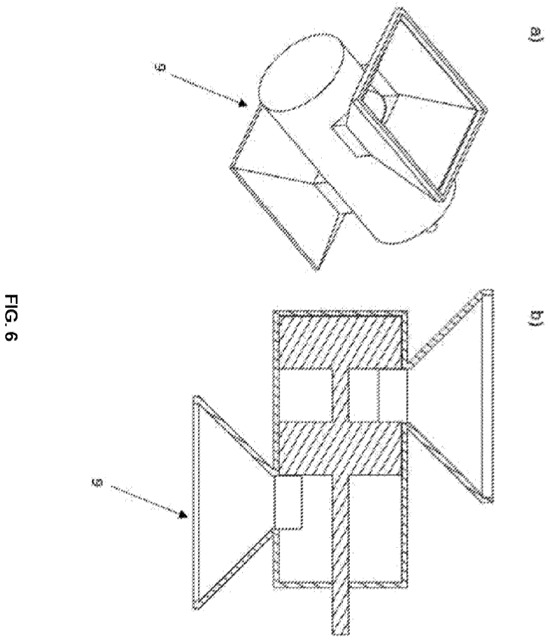

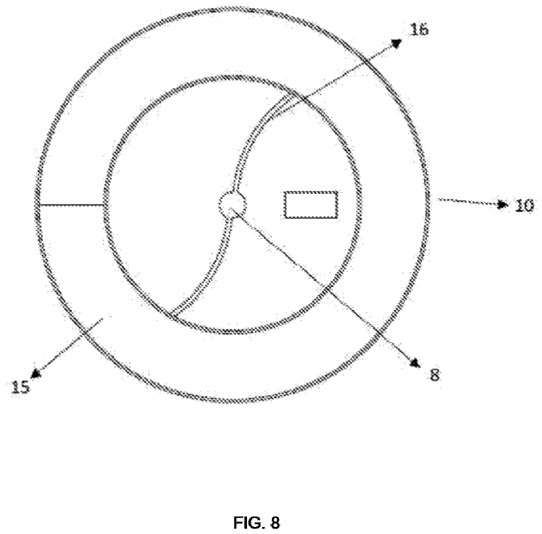

All the chambers that are part of the reactor have a self-powered inner jacket of hot gases, located on the walls of the chambers (2,4,5,6), which perform indirect heating by conduction and radiant surfaces (Figure 6). The vertical chambers have helical agitators or spiral arms (16) to facilitate the movement of the material inside and between them (Figure 8).

The separation between chambers is made with hermetically sealed sluice gates (9), with movement by hydraulic and/or pneumatic drive. The material moves between chambers through these gates, without losing the airtightness (Figure 6).

The supply system (1) consists of a pre-mixer (24), a positive displacement pump for biomass and sludge (25), a shell and tube heat exchanger (23).

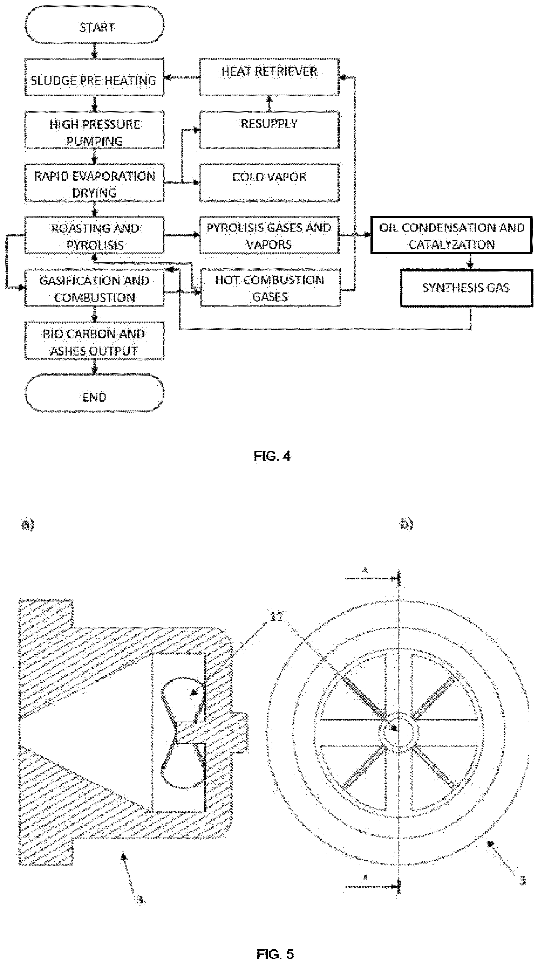

The evaporation chamber (2), connected to the supply system (1), has one or several nozzles or adiabatic expansion valve at its inlet (3), which generate an instantaneous evaporation effect and has a self-cleaning rotor (11) that prevents clogging and performs instantaneous evaporation in consecutive phases under vacuum, as shown in figure 5. The vapor separated in the evaporation chamber (2), extracted by a vacuum pump, is recovered to be re-fed to the gasification and combustion chamber (6), by means of the connecting duct (20), through the steam injectors (21).

This evaporation chamber (2) allows the expansion of the wet biomass for vapor, liquid and solid phase separation with innovative recirculation method to generate two or more instantaneous multi-instantaneous evaporation effects, reducing in each step, not less than 15% of HBH of the substrate. At the outlet of the evaporation chamber, a vacuum pump (12) is connected to remove the cold vapor at low temperature for transfer to a heat recovery unit (23) that preheats the wet biomass at the inlet of the premixing system (24) before the sludge pump (25).

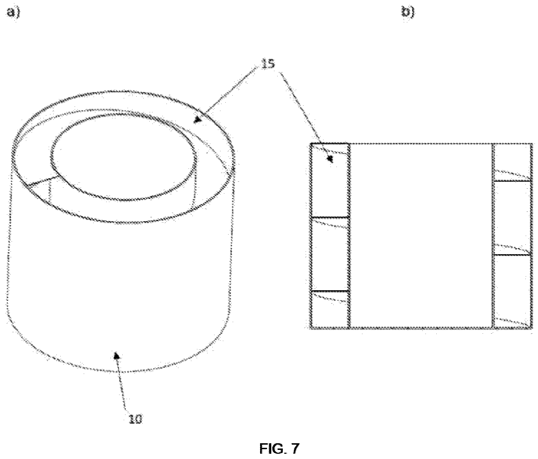

The roasting chamber (4), when present, consists of a hermetic sealing gate (9), as shown in Figure 6. A metallic heating chamber (14) with inner jacket (15) of hot gases coming from the gasification and combustion chamber (6), as shown in figure 7. An agitator with two or more spiral arms (16), attached to a central movement axis (8), in the manner shown in figure 8. A hermetic sealing gate (9), as outlet of the solid material, indicated in figure 6. The roasting chamber (4) is connected to the evaporation chamber (2) by means of the hermetic sealing gate (9), on the upper part; and similarly, it is connected by the bottom part with the pyrolysis chamber (5).

The pyrolysis chamber (5) formed by a hermetic sealing gate (9), as shown in figure 6. A metallic heating chamber (14) with an inner jacket (15) of hot gases coming from the gasification and combustion chamber (6), as shown in figure 7. An agitator with two or more spiral arms (16), attached to a central movement axis (8), as shown in figure 8. A hermetic sealing gate (9) for solid material outlet, as shown in figure 5. A pyrolysis gas outlet duct connected to the condensation and catalysis system (7).

In a preferred embodiment, the evaporation (2), roasting (4) and pyrolysis (5) chambers have grinding bodies, such as spheres, rods or equivalent, to reduce the particle size of the material being processed. Depending on the characteristics of the biomass, the roasting and pyrolysis chambers can be merged into one.

The gasification and combustion chamber (6) has a chamber covered in refractory material (17), thermally insulated, with burners for oil and gas, and a rotating grate attached to the central movement axis (28). An ash pan with an afterburning material outlet auger (13). A duct of connection (18) of burned gases to the jacket of the pyrolysis chamber (5).

This gasification and combustion chamber (6) is lined with refractory and insulating material to withstand temperatures above 1200 °C.

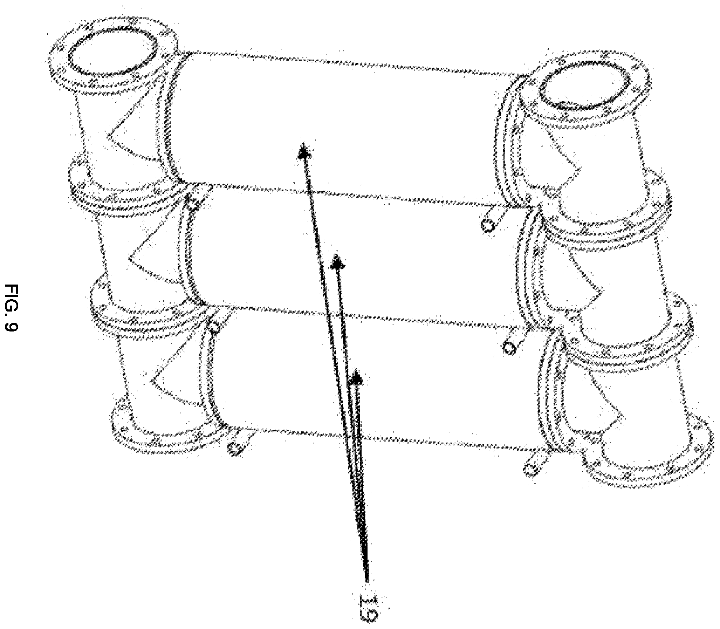

A condensation and catalysis system (7) comprising a bank of heat exchangers or flow-through condensers (19), as shown in Figure 9, water jacketed and saturated with ferritic-based catalyst reagent that facilitates hydrocarbon precipitation.

A heat retriever of the combustion gases (23), by means of a gas - gas plate heat exchanger placed at the outlet of the inner jacket (15). The heat retriever preheats the wet biomass before entering the pre-mixer (24).

All operating variables are controlled by a central electronic system that synchronizes operations and operational parameters once the reactor operating curves are calibrated for different types of biomasses. The system is connected to an loT (Internet of Things) platform for remote monitoring and operation.

### Wet biomass transformation process

The process applies to any type of wet biomass, preferably microalgae biomass, waste biomass or their mixtures present in sludge and/or solids in liquid substrates of urban, rural and industrial origin, more preferably with moisture content from 50% HBH to 95% HBH.

In a preferred method, the wet starting biomass is conditioned to contain volatile matter up to 60% and fixed carbon greater than 5%, calorific value greater than 5 MJ/kg and particle size of the solid fraction up to 25 mm, although it is not limited to these conditions because it is possible to make a pre-treatment to adjust the material to these conditions.

In the process diagram in Figure 4, the residual biomass with moisture up to 95% HBH enters the supply pump (25), which carries the material at a pressure between 7 MPa to 15 MPa and a temperature of 50 °C to 200 °C, depending on the characteristics of the material.

An advantage of the present process is that it is not necessary to interrupt it for new wet biomass to enter the process, taking into account that the reactor is multiphase and of continuous operation. Therefore, once the substrate passes to the second and subsequent chambers, the first chamber can be loaded to start the transformation of more wet biomass that does not require prior drying.

The material passes through a set of nozzles or adiabatic expansion valves (3), which reduces the pressure of the material at the outlet of the supply pump (25), below atmospheric pressure, between 80% to 20% vacuum producing a flash evaporation effect, which separates the water vapor from the solid fraction in the evaporation chamber (2); the material loses between 10% to 30% of the moisture in each pass through the evaporation chamber (2), thus requiring feedback cycles in the evaporation chamber (2), generating a multi flash evaporation effect. The vacuum in the evaporation chamber (2) is generated by the vacuum pump (12).

The vapor separated in the evaporation chamber (2) is recovered and fed to the gasification and combustion chamber (6) by means of the connecting duct (20), through the steam injectors (21). This fed back vapor generates two effects, one of expansion of the bio char by activating it and the other one of increase of the calorific value of the synthesis gas by producing a higher proportion of hydrogen and methane. The vapor flow is regulated by a three-way metering valve (27).

Once the material reaches a humidity of less than 30% HBH, it passes into the roasting (4) and pyrolysis (5) chambers through the hermetically sealed sluice gate (9), which connects the two chambers. The same happens for the passage of the material between the pyrolysis (5) and gasification/combustion chambers (6), through the airlock gate (9).

The material being processed is heated in each chamber and is forced to move axially up-down and radially from center to periphery by the spiral arms (16), also known as helical agitators, which are fixed to the vertical axis of rotation (8), driven by a drive system (22), driven by a motor reducer system.

Gases given off as volatile matter in the roasting (4) / pyrolysis (5) chambers when the process material exceeds 200 °C and up to 550 °C are evacuated through the outlet duct (26), which has an induced draft fan. Then they pass to the condensation and catalysis system (7), where the bio-oil is precipitated when it reaches a temperature below 60°C. The heat recovered in this system is then used in the preheating of the sludge, in the supply system (1), specifically in the pre-mixer (24).

The bio char generated in the pyrolysis stage in the chamber (5) passes into the gasification / combustion chamber (6) through the hermetically sealed sluice gate valve (9). In the chamber (5) the bio char falls on the rotating conical grate (28), where a fraction not exceeding 30% of the processed volume is gasified and combusts on contact with the primary air supplied by the fan, to generate the heat necessary for the endothermic reactions of the evaporation, roasting, pyrolysis and gasification processes. Heat transfer takes place between the combustion gases and each chamber by means of an inner jacket of hot gases (15), insulated to the outside and radiating to the inside where the heat flows through the walls and floors to the material being processed. The waste heat from the combustion gases at the outlet of the reactor jacket is recovered in the heat exchanger (23) to preheat the sludge entering the supply system (1), in the pre-mixer (24).

It is also possible to use part of the bio-oil and synthesis gas for the combustion process. In this case an external burner, connected to the heating jacket (15) of the reactor, is placed in addition to the rotating grate. The flow of hot gases in the heating jacket is controlled by butterfly flow valves and the retention time of the gases is optimized by using flow deflector dampers or baffles inside the heating jacket, as shown in figure 7. The bio char and ash generated in the gasification and combustion chamber (6) are removed from the reactor by means of the auger (13).

### Examples

### Example 1. Process for obtaining electrical and thermal energy from microalgae biomass.

The supplying of the sludge or wet microalga biomass, which can be more than 50% HBH, up to 95% HBH, is carried out at high pressure, from 7 to 15 MPa, bringing it from room temperature to a process temperature between 50 to 200 °C.

This microalga slurry passes through an adiabatic expansion nozzle into an evaporation chamber that has a pressure between 20 to 80% vacuum with respect to atmospheric pressure. The expansion effect reduces the temperature to less than 80 °C, generating an instantaneous evaporation. The microalga sludge is recirculated several times until the humidity is reduced to less than 30%. The vapor is separated from the microalga biomass which passes to the pyrolysis process in another hermetic chamber with indirect heating where it acquires a temperature above 450 °C which allows it to release the volatile matter that passes to the bank of condensers and catalysts where it precipitates at a temperature below 60 °C obtaining the bio-oil, which is a hydrocarbon of medium and high molecular weight. The non-condensed gas below 60 °C is a synthesis gas composed of hydrocarbons of low molecular weight and high calorific value, above 30 MJ/kg. The material that does not volatilize in the pyrolysis chamber is composed of ashes and bio char, which passes to the gasification and combustion chamber to generate the heat required in the endothermic processes of transformation of the microalga biomass. This chamber can also operate with a fraction of the bio oil and synthesis gas, depending on the matter and energy balance. Bio oil can be used in thermal plants for electricity and/or heat generation in isolation and in combination, as in the case of Otto cycle internal combustion engines, Rankine cycle turbines (vapor and ORC organic fluid) and Bryton cycle and Stirling cycle external combustion engines, among others.

Process dimensioning. Balance of matter and energy. It consists in calculating, from the matter and energy balance, the input and output conditions for each of the drying and roasting processes, pyrolysis and gasification,for a capacity of 1.5 TDP. Table 1 presents the summary of the matter and energy balances by process and plant size.

The first column identifies the row of data, the second column identifies the heat treatment process and the product obtained from said process, the third column states the thermodynamic variable being calculated, the fourth column the unit of measurement in international system of units, the fifth column classifies the three plant sizes for the expected capacities and the last column records explanatory notes or the source of information of the recorded data.

**Table 1. Matter and energy balance for plant sizes.**

| ID | PROCE SS / PRODU CT | VARIABLE | UNI T | VALUE | NOTES |
|---|---|---|---|---|---|
| 1 | Supply / Bio solid | Mass flow | kg/h | 62,50 | For 24 hours of continuous operation |
| | | Humidity | % HBS | 95% | |
| | | Pressure | Pa | 75,800. 00 | At Bogotá's atmospheric pressure. El Dorado Airport Station data. |
| | | Temperature | °C | 21.3 | Experimental data during tests in pilot plant. |
| | | Enthalpy | kJ/kg | 95.5 | Experimental data |
| 2 | Drying / Vapor | Mass flow | kg/h | 59.38 | Saturated vapor |
| | | Pressure | Pa | 75,800. 00 | At Bogotá's atmospheric pressure. El Dorado Airport Station data. |
| | | Temperature | °C | 116.40 | Table of saturated vapor |
| | | Enthalpy | kJ/kg | 2,700.0 0 | Table of dry saturated vapor |
| 3 | Drying / Dry bio solid | Mass flow | kg/h | 3,13 | Dehydrated |
| | | Pressure | Pa | 75,800. 00 | At Bogotá's atmospheric pressure. El Dorado Airport Station data. |
| | | Temperature | °C | 116.40 | In thermodynamic equilibrium with vapor. |
| | | Enthalpy | kJ/kg | 12,635 .80 | Experimental data |
| 4 | Roasting / Stabiliz ed bio solid | Mass flow | kg/h | 2.81 | % of mass reduction according to experimental data of pilot plant. |
| | | Pressure | Pa | 75,820. 00 | Pressure increase according to pilot plant experimental data. See performance report. |
| | | Temperature | °C | 300,00 | Data validated in thermogravimetry test. |
| | | Enthalpy | kJ/kg | 11,372. 22 | PCI reduction proportional to mass loss. |
| 5 | Pyrolys is / bio oil | Mass flow | kg/h | 1.34 | MV % of experimental data |
| | | Pressure | Pa | 75,935. 00 | Pressure increase according to pilot plant experimental data. |
| | | Temperature | °C | 500 | Data validated in thermogravimetry test. See characterization report. |
| | | Enthalpy | kJ/kg | 36,710. 00 | Experimental data |
| 6 | Pyrolys is / bio char + ashes | Mass flow | kg/h | 1.31 | Cfij% of experimental data |
| | | Pressure | Pa | 75,935. 00 | Pressure according to pilot plant experimental data |
| | | Temperature | °C | 500 | Data validated in thermogravimetry test. |
| | | Enthalpy | kJ/kg | 6,431.0 0 | Experimental data Lab. IRME. |
| 7 | | Mass flow | kg/h | 0.17 | Calculated by balance |
| | Pyrolysis / syngas | Pressure | Pa | 7,800.0 0 | Discharge at P atm. |
| | | Temperature | °C | 31.7 | Experimental data from pilot plant. |
| | | Enthalpy | kJ/kg | 13,800. 00 | Experimental data |
| 8 | Gasifica tion / syngas | Mass flow | kg/h | 1.43 | MV+Cfj experimental data |
| | | Pressure | Pa | 75,800. 00 | Discharge at P atm. |
| | | Temperature | °C | 60 | Design data from pilot plant. |
| | | Enthalpy | kJ/kg | 13,800. 00 | Experimental data |
| 9 | Gasifica tion / ashes | Mass flow | kg/h | 1.21 | Experimental data |
| | | Pressure | Pa | 75,800. 00 | Discharge at P atm. |
| | | Temperature | °C | 834.4 | Experimental data from pilot plant. |
| | | Enthalpy | kJ/kg | - | Non-combustible material |

Energy balance for autothermal drying: from the data obtained in the balance in Table 1, for a process capacity of 1.5 TPD, it is possible to calculate the energy demand and supply required to dry the microalga substrate using the expected products of the heat treatment, as shown in Table 2.

The heat balance indicates that only the bio-oil drying process is autothermal, with 82% of the energy available in the material. The use of other products, such as dry microalga substrate, bio char and syngas, would require external fuel additions, in proportion to the deficit value indicated in parentheses, for each plant size.

From the thermogravimetry analysis carried out in the characterization of the microalga substrate, the additional thermal power to achieve and maintain the thermolysis and pyrolysis processes can be deduced, as presented in Table 3.

**Table 2. Thermal balance for drying.**

| THERMAL BALANCE FOR DRYING | | | | |
|---|---|---|---|---|
| ID | SOURCE OF ENERGY | VARIABLE | UNIT | VALUE |
| 1 | With dry microalga substrate | Evaporating power | kJ/h | 80,156.25 |
| 2 | | Combustion power | kJ/h | 63,968.74 |
| 3 | | Difference | kJ/h | (16,187.51) |
| 4 | | Power percentage | % | 125% |
| 5 | With bio oil | Evaporating power | kJ/h | 80,156.25 |
| 6 | | Combustion power | kJ/h | 98,084.53 |
| 7 | | Difference | kJ/h | 7,928.28 |
| 8 | | Power percentage | % | 82% |
| 9 | With bio char | Evaporating power | kJ/h | 80,156.25 |
| 10 | | Combustion power | kJ/h | 8,433.15 |
| 11 | | Difference | kJ/h | (71.723,10) |
| 12 | | Power percentage | % | 950% |
| 13 | With syngas | Evaporating power | kJ/h | 80,156.25 |
| 14 | | Combustion power | kJ/h | 19,802.14 |
| 15 | | Difference | kJ/h | (60,354.11) |
| 16 | | Power percentage | % | 405% |

**Table 3. Thermal balance for roasting and pyrolysis processes.**

| THERMAL BALANCE FOR ROASTING AND PYROLYSIS PROCESS | | | | |
|---|---|---|---|---|
| ID | THERMAL JUMP | VARIABLE | UNIDAD | 100 TDP |
| 1 | Evaporation to roasting | Power requirement | kJ/h | 1,237.50 |
| 2 | | Power available | kJ/h | 63,968.74 |
| 3 | | Difference | kJ/h | 62,731.24 |
| 4 | | Power percentage | % | 2% |
| 5 | Evaporation to pyrolysis | Power requirement | kJ/h | 3,037.50 |
| 6 | | Power available | kJ/h | 98,084.53 |
| 7 | | Difference | kJ/h | 95,047.03 |
| 8 | | Power percentage | % | 3% |

From the balance in Table 3, it can be deduced that the processes are still autothermal, consuming an additional 3% of available energy in the material, respectively, for the roasting and pyrolysis processes.

In this way, energy self-consumption would be 85% of the energy available in the roasting stabilized microalga substrate to achieve energy self-sufficiency which, discounting the energy efficiency of combustion and heat transfer, would be in balance.

On the other hand, for the pyrolysis process, 60% of the energy available in the bio-oil would be consumed in order to be autothermal. There would be a remaining bio-oil that, discounting the efficiency of combustion and heat transfer, could be close to 40%, which could be used for energy recovery.

These calculations have been made without considering the efficiency gains from heat recovery of the vapor generated in the drying process, which can generate savings of 30 to 50% of the energy required.

Process specifications: Based on the pilot plant results, the microalga substrate thermal treatment processes are within the specification ranges indicated in Table 4 below. The source refers to the database where the specification value was obtained, presented as an annex to this report.

**Table 4. Process specifications.**

| ID | PROCESS | VARIABLE | UNITD | MIN | MAX |
|---|---|---|---|---|---|
| 1 | Power supply | Mass flow | Kg/h | 30 | 90 |
| | | Humidity | % | - | 95 |
| | | Temperature | °C | 10 | 34 |
| | | Pressure | kPa | 70.0 | 110.0 |
| 2 | Drying system | Mass flow | Kg/h | 30 | 90 |
| | | Humidity | % | | 95 |
| | | Temperature | °C | 10 | 34 |
| | | Pressure | kPa | 70.0 | 110.0 |
| 3 | Roasting system | Mass flow | Kg/h | 3 | 10 |
| | | Humidity | % | 5 | 20 |
| | | Temperature | °C | 300 | 350 |
| | | Pressure | kPa | 70.0 | 110.0 |
| 4 | Pyrolysis system | Mass flow | Kg/h | 5 | 20 |
| | | Humidity | % | 5 | 20 |
| | | Temperature | °C | 400 | 500 |
| | | Pressure | kPa | 70.0 | 110.0 |
| 5 | Gasification system | Mass flow | Kg/h | 3 | 10 |
| | | Humidity | % | | 20 |
| | | Temperature | °C | 900 | 1100 |
| | | Pressure | kPa | 70.0 | 110.0 |

The conversion efficiency of the cogeneration plant is 870 W/kg bio sludge at 30% humidity.

### Example 2. Process for obtaining hydrocarbons from bio solids in a municipal wastewater treatment plant (WWTP).

Bio solids are a product originated after a stabilization process of organic sludge from wastewater treatment (WWTP). Stabilization is carried out to reduce its pathogenicity level, its fermentation power and its capacity to attract vectors-borne diseases. Stabilized sludge or bio solids are considered assimilable urban waste and, although they cannot be classified as toxic or hazardous, they do contain contaminants that require treatment.

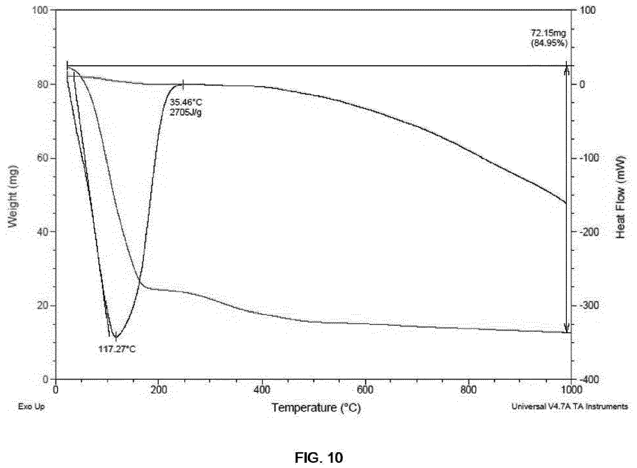

The process begins with the preparation of the bio solids: the material passes into the reactor to undergo the first stage of thermal transformation, which consists of raising the temperature to 120°C to remove excess moisture and leave the material ready for the next stage of thermolysis. The reactor is brought to a temperature of 300°C where the material confined inside, in a sealed chamber and in the absence of oxygen, releases volatile matter, oils and tars; at this temperature the material reaches a state of reduction, densifying and meeting the thermolysis parameters. In the next stage of the process, the biomass is brought to temperatures above 500°C also in the absence of oxygen, where all the volatile matter has been converted into vapors and gases containing oils and tars that are discharged through a valve to achieve pyrolysis conditions. In the next stage, the material is brought to temperatures above 900°C where the transformation to total gas phase occurs through the addition of a sub-stoichiometric fraction to increase the energy supply and achieve gasification conditions, obtaining synthetic biofuels. Figure 10 presents the thermo gravimetric curve of the behavior of the bio solid described above. The gases and vapors obtained in the thermolysis and pyrolysis phases can be condensed, cooling them to temperatures below 80°C by means of a heat exchanger, thus condensing the vapors and obtaining the biofuel in liquid phase. The product that remains in the reactor in the pyrolysis phase is bio char and bio oils used as agricultural inputs. The efficiency of conversion of bio solid to final products is summarized in the following table:

| BALANCE OF ENERGY AND MATTER - BIOSOLIDS | | | | |
|---|---|---|---|---|
| ID | PROCESS / PRODUCT | VARIABLE | UNIT | VALUE |
| 1 | Supply / Bio solid | Mass flow | kg/h | 1,000.00 |
| 2 | | Humidity | % HBS | 77% |
| 3 | | Pressure | kPa | 75.80 |
| 4 | | Temperature | °C | 21.3 |
| 5 | | Enthalpy | kJ/kg | 95.5 |
| 6 | Drying / Vapor | Mass flow | kg/h | 770.00 |
| 7 | | Pressure | kPa | 75.80 |
| 8 | | Temperature | °C | 116.40 |
| 9 | | Enthalpy | kJ/kg | 2,700.00 |
| 10 | Drying / Dry bio solid | Mass flow | kg/h | 230.00 |
| 11 | | Pressure | kPa | 75.80 |
| 12 | | Temperature | °C | 116.40 |
| 13 | | Enthalpy | kJ/kg | 12,635.80 |
| 14 | | Mass flow | kg/h | 207.00 |

| ID | PROCESS/PRODUCT | VARIABLE | UNIT | VALUE |
|---|---|---|---|---|
| 15 | Roasting / Stabilized bio solids | Pressure | Pa | 95.80 |
| 16 | | Temperature | °C | 300.00 |
| 17 | | Enthalpy | kJ/kg | 11,372.22 |
| 18 | Pyrolysis / bio oil | Mass flow | kg/h | 98.33 |
| 19 | | Pressure | Pa | 210.80 |
| 20 | | Temperature | °C | 500 |
| 21 | | Enthalpy | kJ/kg | 36,710.00 |
| 22 | Pyrolysis / bio char + ashes | Mass flow | kg/h | 96.51 |
| 23 | | Pressure | Pa | 210.80 |
| 24 | | Temperature | °C | 500 |
| 25 | | Enthalpy | kJ/kg | 6,431.00 |
| 26 | Pyrolysis / syngas | Mass flow | kg/h | 12.16 |
| 27 | | Pressure | Pa | 75.80 |
| 28 | | Temperature | °C | 31.7 |
| 29 | | Enthalpy | kJ/kg | 13,800.00 |
| 30 | Gasification / syngas | Mass flow | kg/h | 105.61 |
| 31 | | Pressure | Pa | 75.80 |
| 32 | | Temperature | °C | 60 |
| 33 | | Enthalpy | kJ/kg | 13,800.00 |
| 34 | Gasification / ashes | Mass flow | kg/h | 89.22 |
| 35 | | Pressure | Pa | 75.80 |
| 36 | | Temperature | °C | 834.4 |
| 37 | | Enthalpy | kJ/kg | - |

### Bibliographic references

Brett Digman, H. S.-S. (30/01/2020). American Institute of Chemical Engineers. Obtained from https://aiche.onlinelibrary.wiley.com/doi/abs/10.1002/ep.10336
John J. Milledge 1, B. S. (31/01/2020). Energies Journal. Obtained from www.mdpi.com/journal/energies:
   10 John J. Milledge, S. H. (31/01/2020). SpringerLink. Obtained from https://link.springer.com/article/10.1007/s11157-014-9339-1 Schmidt, H.-P. (2012). 55 Uses of Bio char. Ithakajournal 1, 286 - 289.

## Claims

1. Multiphase continuous vertical reactor for the production of hydrocarbons and energy from biomass with a high degree of humidity **characterized by** a vertical vessel (10), with interior of multiple separate chambers, being from top to bottom the following: evaporation (2), pyrolysis (5), gasification and combustion (6); where the evaporation chamber (2) has an adiabatic expansion valve (3) with self-cleaning rotor (11) that performs instantaneous evaporation in consecutive phases in vacuum.

2. Reactor, according to claim 1, **characterized by** having a roasting chamber (4) between the evaporation chamber (2) and the pyrolysis chamber (5).

3. Reactor, according to claim 1, **characterized by** having an inner jacket (15) on the walls of the chambers (2,4,5,6), which performs indirect heating by conduction and radiant surfaces.

4. Reactor, according to claim 1, **characterized by** the fact that evaporation (2) and pyrolysis (5) chambers have grinding bodies to reduce the particle size of the material in process.

5. Reactor, according to claim 1, **characterized by** the fact that pyrolysis chamber (5) has a connecting duct (26) which conducts the gases to a condensation and catalysis system (7).

6. Reactor according to claim 1, **characterized by** a gas outlet duct (20) leading from the evaporation chamber (2) to the gasification chamber (6), where steam injectors (21) are provided.

7. Reactor according to claim 1, **characterized by** the fact that condensation and catalysis system (7) is of direct flow and inside it the catalyst material is introduced, which comes into direct contact with the vapors and is cooled by means of a water jacket.

8. Reactor, according to claim 1, **characterized by** hermetic lock type closing gates (9) between chambers, with movement by hydraulic and/or pneumatic actuation.

9. Reactor, according to claim 1, **characterized by** the fact that gasification and combustion chamber (6) has a worm screw (13) for removal of ashes and other combustion residues.

10. Reactor, according to claim 1, **characterized by** a gasification and combustion chamber (6) lined with refractory and insulating material.

11. Process for obtaining hydrocarbons and energy from wet biomass in a continuous vertical multiphase reactor, **comprising** the following stages:
a. Drying wet biomass in the evaporation chamber (2) by change of pressure and temperature, through adiabatic expansion nozzles (3) by going from pressures above 7 MPa and temperatures above 80 °C to a vacuum pressure up to 15 kPa, or its equivalent at 80% vacuum and vacuum temperature, to a vacuum pressure up to 15 kPa, or its equivalent at 80% vacuum and temperature of evaporation temperature below 60 °C;
b. Roasting and pyrolyzing in the roasting chambers (4) and pyrolysis (5) of the dried material, by heating up to 550°C, preferably in vacuum condition, from 20% to 80%, to reduce this temperature by 20% and release volatile matter;
c. Gasification and combustion of the substrate in the gasification and combustion chamber (6), by incomplete combustion, supplying a quantity of comburent below the stoichiometric ratio;
where the stages follow one after the other continuously and it is not necessary to interrupt the process for new wet biomass to enter and to be transformed.

12. Process according to claim 11 **characterized by** the fact that the wet biomass enters the reactor at high pressure, higher than 7 MPa, with humidity up to 95%, and with preheating up to temperatures of 200 °C.

13. Process according to claim 11 **characterized by** the fact that stage a) is repeated by feeding the wet biomass back several times to perform instantaneous evaporation in consecutive phases under vacuum, by the high-pressure pumping circuit and expansion, until the required moisture for the next stage is achieved.

14. Process according to claim 11 **characterized by** the fact that in stage b), the volatile matter gas obtained in the pyrolysis chamber (5), reaches the condensation and catalysis system (7) where it comes into contact with the ferric based catalyst. The temperature is reduced to less than 60 °C and it precipitates in liquid form from bio-oil.

15. Process according to claim 11 **characterized by** the fact that in stage c) the combustion occurs with the synthesis gas generated in the pyrolysis chamber (5) and/or with the bio-oil produced in the condensation and catalysis system (7).
